# EUROPÄISCHE PATENTSCHRIFT

(11) **EP 1 656 827 B1**
(45) Veröffentlichungstag und Bekanntmachung des Hinweises auf die Patenterteilung: **02.04.2008**
(21) Anmeldenummer: 06100244.0
(22) Anmeldetag: 28.11.2003
(51) Int. Cl.: A01F 12/40, A01D 41/12

(54) **Mähdrescher mit Strohhäcksler**
Combine with straw chopper
Moissonneuse-batteuse avec hache-paille

(30) Priorität: 05.12.2002 DE 10256744
(43) Veröffentlichungstag der Anmeldung: 17.05.2006
(62) Teilanmeldung aus: 03027215.7
(73) Patentinhaber: Deere & Company, Moline, IL 61265-8098 (US)
(72) Erfinder: Weichholdt, Dirk, 57200, Sarreguemines (FR)
(74) Vertreter: Holst, Sönke

(56) Entgegenhaltungen:
- EP-A- 0 212 270
- WO-A-02/34029
- DE-A- 10 064 356
- DE-A1- 3 834 102
- US-A- 4 913 679

## Beschreibung

Die Erfindung betrifft einen Mähdrescher, mit einer Trenneinrichtung, aus der ein erster Erntegutrestestrom in einer Häckselbetriebsart einem Strohhäcksler zuführbar ist und/oder in einer Langstrohablagebetriebsart am Strohhäcksler vorbeiführbar und als Schwad auf dem Boden eines Feldes ablegbar ist, einer Reinigungseinrichtung, aus der ein zweiter Erntegutrestestrom in der Häckselbetriebsart und/oder in der Langstrohablagebetriebsart dem Strohhäcksler zuführbar ist, und einer Fördereinrichtung zur Förderung des zweiten Erntegutrestestroms von der Reinigungseinrichtung zum Strohhäcksler.

Die EP 0 727 135 A beschreibt einen Mähdrescher, bei dem das Stroh von den Strohschüttlern durch ein Leitblech in einer Langstrohablagebetriebsart in einem Schwad auf dem Boden abgelegt oder in einer Häckselbetriebsart einem Strohhäcksler zugeführt wird, in der es gehäckselt und auf dem Feld verteilt wird. Das Leitblech kann in eine dritte Stellung verbracht werden, in der sowohl das Stroh als auch die Spreu durch den Strohhäcksler geführt werden. Die Spreu wird durch Gebläse von der Reinigung in den Strohhäcksler gefördert.

In der WO 01/01754 A wird ein Mähdrescher mit einem Strohhäcksler und einem Spreuverteiler beschrieben. Der Spreuverteiler ist derart angeordnet, dass er die Spreu stromauf des Strohhäckslers in den Strohstrom einwerfen kann, so dass sie gemeinsam mit dem Stroh den Strohhäcksler durchläuft und etwa über die Arbeitsbreite des Schneidwerks auf dem Feld verteilt wird. Außerdem ist es möglich, die Spreu durch den Spreuverteiler über die Arbeitsbreite zu verteilen, ohne dass sie den Strohhäcksler durchläuft, während das Stroh durch den Strohhäcksler gehäckselt und breitverteilt wird. Wird das Stroh nicht gehäckselt, sondern durch ein schwenkbares Strohführungsblech an der Vorderseite des Strohhäckslers vorbeigeleitet und auf dem Feldboden abgelegt, kann die Spreu durch den Spreuverteiler über die Arbeitsbreite des Schneidwerks auf dem Feld verteilt oder in das Strohschwad eingeblasen werden.

Die WO 02/34029 A schlägt eine andere Anordnung des Spreuverteilers vor. Er kann die Spreu direkt gegen die stromab des Strohhäckslers angeordneten Strohleitbleche blasen, so dass das gehäckselte Stroh und die Spreu durch die Leitbleche über die Arbeitsbreite verteilt werden. In einer anderen Betriebsart wird das Stroh hinter dem Strohhäcksler vorbeigeleitet und als Schwad auf dem Feld abgelegt, wobei die Spreu durch die Spreuverteiler an den Strohleitblechen entlanggeführt und beidseits des Schwads über die Arbeitsbreite verteilt auf dem Feld abgelegt wird. In weiteren Betriebsarten wird das Stroh durch den Strohhäcksler gehäckselt und über die Arbeitsbreite verteilt oder in einem Schwad abgelegt, während die Spreu durch die Spreuverteiler beidseits des Schwads über die Arbeitsbreite verteilt wird. Schließlich ist die Möglichkeit vorgesehen, auch im Schwadablagebetrieb die Spreu in das Strohschwad einzublasen.

In der DE 100 64 356 A wird vorgeschlagen, die Spreu stets durch den Strohhäcksler zu leiten, während das Stroh entweder im Häckselbetrieb durch den Strohhäcksler geleitet oder im Schwadablagebetrieb an dessen Rückseite vorbeigeleitet und in einem Schwad auf dem Boden abgelegt wird. Im Schwadablagebetrieb werden die Strohleitbleche in eine Stellung gebracht, in der die Spreu beidseits des Schwads über die Arbeitsbreite verteilt wird. Im Langstrohablagebetrieb werden Spreu und Stroh über die Arbeitsbreite des Felds verteilt. Die Spreu soll durch das Gebläse der Reinigung und die Saugwirkung des Strohhäckslers in letzteren hineingefördert werden.

Ähnliche Anordnungen sind auch aus den Prospekten "Deutz-Fahr Topliner 8XL", Druckvermerk 91 532 01 Printed in Germany 9906, "Case IH Cross-Flow", Druckvermerk CF80-D-BR-10/99, und New Holland CX-Mähdrescher, Druckvermerk Printed in Italy - 01/09 - Satiz Srl (Turin) - Cod. N. 12003/BR/D00 bekannt. Dort wird das Stroh entweder durch den Strohhäcksler gefördert, gehäckselt und über die Arbeitsbreite verteilt, oder an dessen Rückseite vorbeigeführt und in einem Schwad auf dem Feld abgelegt. Die Spreu wird durch Spreuverteilergebläse (Deutz-Fahr), Wurfgebläse-Spreuverteiler (Case IH) oder hydraulisch angetriebene Radialgebläse (New Holland) in den Strohhäcksler gefördert. Da der Strohhäcksler auch im Schwadablagebetrieb arbeitet, wird die Spreu über die Arbeitsbreite verteilt und das Stroh kann ohne Spreuanteil geerntet werden.

Ein Nachteil des in der EP 0 727 135 A vorgeschlagenen Mähdreschers liegt darin, dass bei der Schwadablagebetriebsart keine Breitverteilung der Spreu möglich ist. Die in den beiden oben genannten WO-Schriften vorgeschlagenen Ausführungsformen erlauben hingegen durch die Verwendung separater Spreuverteiler eine Vielzahl von Betriebsarten. Allerdings sind die Spreuverteiler relativ kostenaufwändig und schwer. Bei den Ausführungsformen gemäß DE 100 64 356 A und den erwähnten Prospekten erübrigen sich die Spreuverteiler, da die Strohhäcksler deren Aufgabe übernehmen. Die Ausführungsformen nach DE 100 64 356 A und den genannten Prospekten ermöglichen nur eine Breitverteilung der Spreu. Es gibt jedoch Anwendungsfälle, bei denen es wünschenswert ist, auch die Spreu mit in das Strohschwad einzubringen.

Die EP 0 212 270 A beschreibt einen Mähdrescher mit einem Strohhäcksler und einer diesem nachgeordneten Verteilereinrichtung, die mit in seitlicher Richtung verstellbaren Leitkufen ausgestattet ist. Die Leitkufen können zwischen einer Breitstreueinstellung und einer Sammelstellung verschwenkt werden, in der das Stroh mittig hinter dem Mähdrescher in einem Schwad abgelegt wird.

Die der Erfindung zu Grunde liegende Aufgabe wird darin gesehen, einen verbesserten Mähdrescher bereitzustellen, bei dem auch die Spreu durch einen Strohhäcksler verteilbar ist.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es wird vorgeschlagen, dass der zweite Erntegutrestestrom bei der Langstrohablagebetriebsart ebenfalls in einem Schwad ablegbar ist. Er wird in das Strohschwad eingebracht oder darunter abgelegt. Dadurch kann die Spreu gemeinsam mit dem Stroh aufgenommen und verwertet werden.

Die Ablage des zweiten Erntegutrestestroms kann durch mehrere seitlich nebeneinander angeordnete Strohleitbleche gesteuert werden, die sich stromab des Auslasses des Strohhäckslers befinden. Sie können die Erntegutreste aus dem Strohhäcksler im Schwad ablegen oder etwa über die Arbeitsbreite des Schneidwerks des Mähdreschers verteilen. Bei einem Langstrohablagebetrieb können sie den zweiten Erntegutrestestrom auch derart weit nach außen ablenken, dass er seitlich neben dem Schwad zu liegen kommt, so dass das Stroh ohne Spreuanteil durch eine Ballenpresse oder dergleichen aufgenommen und der Weiterverarbeitung zugeführt werden kann.

Wie bereits in der nachveröffentlichten DE 102 49 257 A beschrieben, kann zwischen dem Auslass der Trenneinrichtung und dem Einlass des Strohhäckslers eine Auswurftrommel vorgesehen sein, um die Förderung des ersten Erntegutrestestroms zu verbessern.

In der genannten Druckschrift wird auch ein bewegliches Strohleitelement vorgeschlagen, das auf einfache Weise eine Umschaltung zwischen dem Langstrohablagebetrieb und dem Häckselbetrieb ermöglicht. Beim Langstrohablagebetrieb wird der erste Erntegutrestestrom vorzugsweise an der Rückseite des Strohhäckslers entlang geführt, obwohl es auch möglich wäre, ihn seitlich am Strohhäcksler entlang zu leiten. Denkbar ist weiterhin die Verwendung des in der DE 102 19 895 A, vorgeschlagenen beweglichen Strohleitelements zur Umschaltung zwischen Langstrohablage- und Häckselbetrieb.

In den Zeichnungen ist ein nachfolgend näher beschriebenes Ausführungsbeispiel der Erfindung dargestellt. Es zeigt:
- Fig. 1: eine schematische Seitenansicht eines Mähdreschers mit einem Axialabscheider und einem Strohhäcksler, der zum Ausbringen der Spreu dient,
- Fig. 2: eine seitliche Ansicht des Schwingbodens, der in dem Mähdrescher aus Figur 1 die Spreu in den Strohhäcksler fördert,
- Fig. 3a und 3b: eine schematische seitliche Ansicht und Draufsicht auf den Mähdrescher in einem Betriebsmodus, bei dem das Stroh in einem Schwad abgelegt wird, während die Spreu durch den Strohhäcksler über die Arbeitsbreite verteilt wird,
- Fig. 4a und 4b: eine schematische seitliche Ansicht und Draufsicht auf den Mähdrescher in einem Betriebsmodus, bei dem das Stroh in einem Schwad abgelegt wird, während die Spreu durch den Strohhäcksler in das Strohschwad eingebracht wird, und
- Fig. 5a und 5b: eine schematische seitliche Ansicht und Draufsicht auf den Mähdrescher in einem Betriebsmodus, bei dem das Stroh und die Spreu den Strohhäcksler durchlaufen und über die Arbeitsbreite verteilt werden.

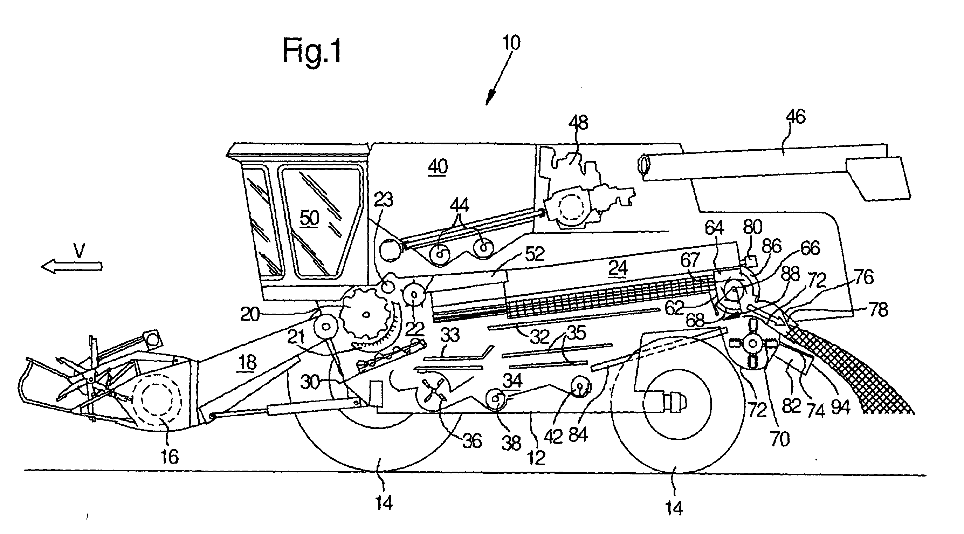

Die Figur 1 zeigt einen selbstfahrenden Mähdrescher 10 mit einem Tragrahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung in Form eines Schneidwerks 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Auch die Verwendung von stromab einer Dreschtrommel angeordneten Strohschüttlern oder Abscheidetrommeln als Abscheidemittel ist denkbar. Eine Abstreifrolle 23 und eine Wendetrommel 22 führen gemeinsam mit einem Zufuhrgehäuse das gedroschene Erntegut von der Dreschtrommel 20 und dem Dreschkorb 21 einem Axialabscheider 24 zu. Der Axialabscheider 24 wird an seiner Rückseite durch ein Getriebe 80 angetrieben. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus dem Axialabscheider 24 austreten, fallen auf einen Schüttelboden 32, der sie zur Weitergabe auf den Vorbereitungsboden 33 führt. Der Vorbereitungsboden 33 gibt das Getreide und die Spreu einer Reinigungseinrichtung 34 mit darin angeordneten Sieben 35 weiter, der ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Siebeinrichtung auf einen sich in einer Schwingbewegung befindlichen Schwingboden 84 ausgeworfen. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus kontrolliert wird. Die verschiedenen Vorrichtungen zum Dreschen, Fördern, Reinigen und Abscheiden befinden sich innerhalb des Tragrahmens 12.

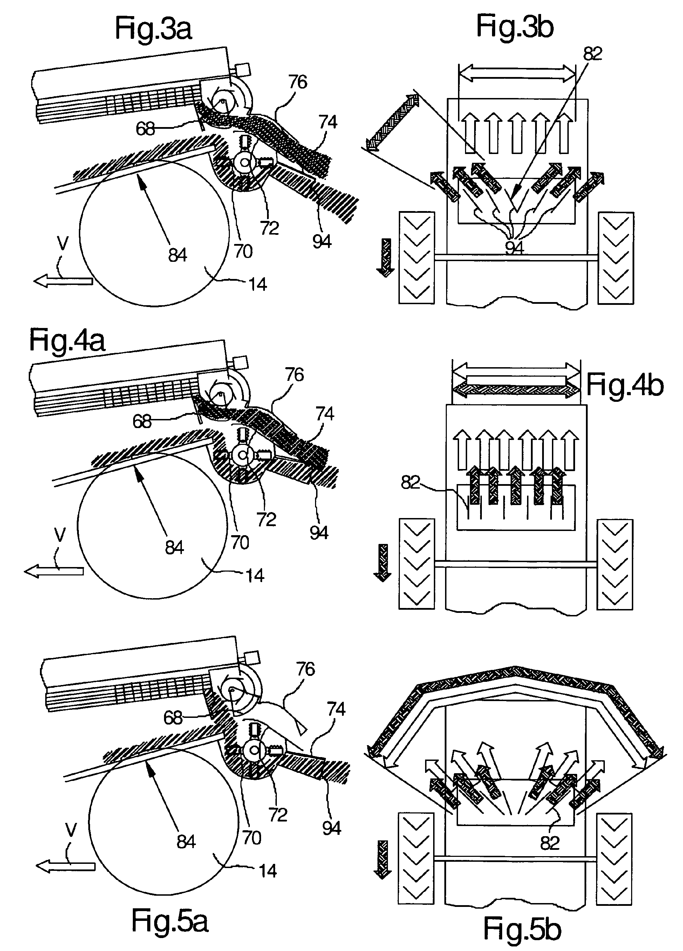

Vom Axialabscheider 24, der als Trenneinrichtung dient (oder einer der anderen oben genannten, alternativ verwendbaren Trenneinrichtungen), wird ein erster Erntegutrestestrom, der im Wesentlichen aus ausgedroschenen Erntegutresten (Stroh) besteht, durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich quer zur Fahrtrichtung erstreckt, durch einen Antrieb in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in den Figuren 1, 3a und 4a dargestellten Langstrohablageposition und der in der Figur 5a dargestellten Häckselposition verschwenkt werden.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in den Figuren im Gegenuhrzeigersinn) durch einen Antrieb in Drehung versetzbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen. Ein Teil des Gehäuses 72 erstreckt sich oberhalb des Strohhäckslers 70 vom vorderen Ende der Strohverteilerhaube 74 kreisbogenförmig bis etwa zu einem Punkt oberhalb der Drehachse des Strohhäckslers 70, wie in den Figuren 1, 3a, 4a und 5a dargestellt.

Das Strohleitelement 68 ist in sich konkav (und kreisbogenförmig) gekrümmt und umschließt die Auswurftrommel 66 um einen Winkelbereich von etwa 45° konzentrisch. Es ist an seinen in Querrichtung äußeren Enden schwenkbar am Tragrahmen 12 des Mähdreschers 10 angelenkt. Das Strohleitelement 68 erstreckt sich in der in den Figuren 1, 3a und 4a wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste von der Auswurftrommel 66 unterhalb einer Auswurfhaube 76 schräg nach hinten und unten abgegeben werden. Die Auswurfhaube 76 ist - wie die Strohverteilerhaube 74 - an ihrer Unterseite mit Strohleitblechen 78 versehen, um die Breite des Schwads, in der die Erntegutreste abgelegt werden, zu definieren.

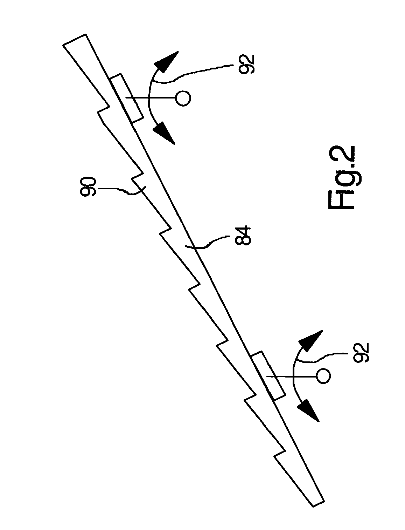

Der Schwingboden 84 erstreckt sich vom hinteren, unteren Ende der Reinigungseinrichtung 34 schräg nach hinten und oben bis zu einem Häckslereinlass 88, der als eine sich über die Breite des Auswurfschachts und des Strohhäckslers 70 erstreckende Öffnung zwischen dem unteren Ende der vorderen Wand 62 des Auswurfschachts und dem oberen Ende des Gehäuses 72 des Strohhäckslers 70 gestaltet ist. Es wird auf die Figur 2 Bezug genommen, anhand der erkennbar ist, dass der Schwingboden 84 durch geeignete Antriebe, z. B. Exzenter, ähnlich dem Schüttelboden 32 entlang seiner Längsrichtung in eine hin- und hergehende Schwingbewegung versetzt wird, wie durch die Pfeile 92 angedeutet. Da der Schwingboden 84 mit sägezahnförmigen Stufen 90 versehen ist, wie anhand der Figur 2 erkennbar ist, oder einer anderen geeigneten Oberflächenstruktur, wandern die Spreu und andere Kurzstrohanteile, die als zweiter Erntegutrestestrom von der Reinigungseinrichtung 34 an deren hinterem Ende durch die Wirkung des Gebläses 36 und durch die Schwerkraft auf den Schwingboden 84 abgegeben werden, auf dem Schwingboden 84 nach hinten und oben, wo sie durch die Öffnung 88 abgegeben werden und in den Strohhäcksler 70 hinein gelangen.

Der Strohhäcksler 70 wird auch in der Stellung des Leitblechs 68, wie sie in den Figuren 1, 3a und 4a dargestellt ist, in Antrieb versetzt. Er übt eine Förderwirkung auf die Spreu und die Kurzstrohanteile auf, die dazu hinreicht, sie entlang der Strohleitbleche 82 zu fördern und hinter dem Mähdrescher 10 auf dem Feld auszustoßen.

Die Strohleitbleche 82 der Strohverteilerhaube 74 sind um sich quer zu ihren Längsachsen und der Gutflussrichtung erstreckende Achsen 94 schwenkbar an der Strohverteilerhaube 74 angelenkt. Die Schwenkachsen befinden sich in der dargestellten Ausführungsform etwa an den rückwärtigen Enden der Strohleitbleche. Die Verstellung der Strohleitbleche 82 kann manuell oder von der Fahrerkabine 50 aus ferngesteuert durch geeignete Aktoren in Form von Elektro- oder Hydraulikmotoren, insbesondere mit einer Steuerung durch geeignete Sensoren, die selbsttätig das Erreichen der gewünschten Streubreite sicherstellen, erfolgen. Auf diese Weise sind die Strohleitbleche 82 zwischen der in der Figur 3b gezeigten Breitablageposition und der in Figur 4b dargestellten Schwadablageposition beweglich.

In der Breitablageposition (Figur 3b) weisen die rückwärtigen Enden der Strohleitbleche 82 nach außen und die beiden mittleren Strohleitbleche 82 legen sich an ihren vorderen Enden aneinander und unterbinden einen Durchgang der Spreu in das Schwad, so dass die Spreu auf beiden Seiten und außerhalb des im Langstrohablagemodus in einem Schwad abgelegten Strohs etwa über die Breite des Schneidwerks 16 verteilt wird. Wie anhand der Pfeile in Figur 3b erkennbar ist, kann das Stroh ohne Spreuanteil geerntet werden.

In der Schwadablageposition (Figur 4) erstrecken sich die Strohleitbleche 82 in der Vorwärtsfahrtrichtung V des Mähdreschers 10. Die Spreu wird in einem Schwad, dessen Breite etwa der Breite des Strohschwads entspricht, in das Strohschwad eingeblasen, so dass ein Stroh/Spreu-Gemisch im Schwad abgelegt wird, wie anhand der Figuren 4a und 4b erkennbar. Durch manuelles oder motorisches Verschwenken der Strohverteilerhaube 74 um die horizontale, quer zur Vorwärtsfahrtrichtung V verlaufende Achse an ihrem Anlenkpunkt am Gehäuse 72 des Strohhäckslers 70 nach unten könnte die Spreu auch unterhalb des Strohschwads abgelegt werden.

Es ist im Übrigen auch im Langstrohablagebetrieb denkbar, die Strohleitbleche 82 in eine Stellung zu verbringen, in der die Spreu über das Feld verteilt wird, wobei auch ein Teil der Spreu unter dem Strohschwad zu liegen kommt, analog der in Figur 5b dargestellten Stellung.

In der Häckselposition ist das Strohleitelement 68 um die Drehachse der Auswurftrommel 66 (bezüglich der Figur 1 im Uhrzeigersinn) nach hinten verschwenkt, wie in der Figur 5a dargestellt. Dadurch wird zwischen der vorderen Wand 62 und der vorderen Kante des Strohleitelements 68 eine Öffnung freigegeben, durch die die Erntegutreste in den Strohhäcksler 70 gelangen. Das Strohleitelement 68 verlängert in dieser Position die rückwärtige Wand 86 nach unten und vorn. In ihrem Bereich unterhalb der Linie, an der das Strohleitelement 68 zum Anliegen kommt, wenn es sich in der Langstrohablageposition befindet, könnte die vordere Wand 62 ebenfalls mit Leitkufen 84 versehen sein, um den Strohhäcksler 70 möglichst gleichmäßig beschicken zu können. Im Strohhäcksler 70 werden das Stroh und die Spreu gemeinsam gehäckselt und schräg nach hinten und unten ausgeworfen und über die Arbeitsbreite des Schneidwerks 16 über das Feld verteilt, wie anhand der Pfeile in der Figur 5b dargestellt.

Das Strohleitelement 68 kann durch einen Mechanismus von Hand oder durch geeignete Motore vorzugsweise aus der Fahrerkabine 50 ferngesteuert zwischen der Langstrohablage- und der Häckselposition bewegt werden. Dabei können Knöpfe oder Menüs vorhanden sein, die gleichzeitige Verstellungen des Strohleitelements 68 und der Strohleitbleche 82 ermöglichen, so dass jede der in den Figuren 3, 4 und 5 dargestellten Betriebsstellungen des Strohleitelements 68 und der Strohleitbleche 82 durch Drücken nur eines Knopfes oder Bestätigung der Auswahl nur einer Betriebsart auf einem Bildschirm anwählbar ist.

## Patentansprüche

1. Mähdrescher (10) mit einer Trenneinrichtung, aus der ein erster Erntegutrestestrom in einer Häckselbetriebsart einem Strohhäcksler (70) zuführbar ist und in einer Langstrohablagebetriebsart am Strohhäcksler (70) vorbeiführbar und als Schwad auf dem Boden eines Feldes ablegbar ist, und mit einer Reinigungseinrichtung (34), aus der ein zweiter Erntegutrestestrom in der Häckselbetriebsart und in der Langstrohablagebetriebsart dem Strohhäcksler (70) zuführbar ist, **dadurch gekennzeichnet, dass** der zweite Erntegutrestestrom in der Langstrohablagebetriebsart in einem Schwad ablegbar ist.

2. Mähdrescher (10) nach Anspruch 1, **dadurch gekennzeichnet, dass** in der Langstrohablagebetriebsart der zweite Erntegutrestestrom in den ersten Erntegutrestestrom einbringbar oder darunter ablegbar ist.

3. Mähdrescher (10) nach Anspruch 1 oder 2, **dadurch gekennzeichnet, dass** stromab des Strohhäckslers (70) seitlich nebeneinander angeordnete Strohleitbleche (82) angeordnet sind, die zwischen einer Schwadablagestellung, in der die Erntegutreste in einem Schwad abgelegt werden, und einer Breitverteilstellung, in der die Erntegutreste über die Arbeitsbreite verteilt werden, verstellbar sind.

4. Mähdrescher nach Anspruch 3, **dadurch gekennzeichnet, dass** die Strohleitbleche (82) in eine Stellung verbringbar sind, in der der zweite Erntegutrestestrom außerhalb des Schwads des ersten Erntegutrestestroms breitverteilbar ist.

5. Mähdrescher nach einem der vorhergehenden Ansprüche, **gekennzeichnet durch** eine zwischen einem Auslass (64) der Trenneinrichtung und dem Strohhäcksler (70) angeordnete, in Drehung versetzbare Auswurftrommel (66).

6. Mähdrescher (10) nach einem der vorhergehenden Ansprüche, **dadurch gekennzeichnet, dass** zwischen dem Auslass der Trenneinrichtung und dem Strohhäcksler (70) ein bewegliches Strohleitelement (68) angeordnet ist, das den ersten Erntegutrestestrom in einer ersten Position am Strohhäcksler (70) vorbeileitet, vorzugsweise an dessen Rückseite, so dass er in einem Schwad auf dem Boden des Felds abgelegt wird, und in einer zweiten Position bewirkt, dass der erste Erntegutrestestrom in den Strohhäcksler (70) gelangt.

7. Mähdrescher (10) nach Anspruch 6, **dadurch gekennzeichnet, dass** das Strohleitelement (68) um eine parallel zur Achse der Auswurftrommel und vorzugsweise damit zusammenfallende Achse schwenkbar ist, die horizontal und quer zur Fahrtrichtung des Mähdreschers (10) verläuft.

8. Mähdrescher (10) nach einem der Ansprüche 1 bis 7, **dadurch gekennzeichnet, dass** der Strohhäcksler (70) in einem Gehäuse (72) um eine horizontale, quer zur Fahrtrichtung verlaufende Achse durch einen Antrieb in Drehung versetzbar ist und einen zylindrischen Körper mit pendelnd daran aufgehängten Häckselmessern umfasst, die mit im Gehäuse (72) angeordneten stationären Gegenmessern zusammenwirken und die Erntegutreste häckseln und mittels einer mit Strohleitblechen (82) ausgestatteten Strohverteilerhaube (74) etwa über die Schnittbreite des Mähdreschers (10) auf dem Feld zu verteilen.

9. Mähdrescher (10) nach Anspruch 8, **dadurch gekennzeichnet, dass** die Strohverteilerhaube (74) manuell oder motorisch um die horizontale, quer zur Vorwärtsfahrtrichtung (V) verlaufende Achse an ihrem Anlenkpunkt am Gehäuse (72) des Strohhäckslers (70) nach unten verschwenkbar ist, um die Spreu unterhalb des Strohschwads abzulegen.

10. Mähdrescher (10) nach einem der Ansprüche 6 bis 9, **dadurch gekennzeichnet, dass** das Strohleitelement (68) durch Motore zwischen der Langstrohablage- und der Häckselposition bewegt werden kann, dass die Strohleitbleche (82) durch Aktoren bewegbar sind, und dass Knöpfe oder Menüs vorhanden sind, die gleichzeitige Verstellungen des Strohleitelements (68) und der Strohleitbleche (82) ermöglichen.

## Claims

1. Combine (10) comprising a cutting device, from which a first crop residue stream may be delivered to a straw chopper (70) in a chopping operating mode and may bypass the straw chopper (70) in a straw deposit mode and may be deposited as a swath on the ground of a field, and with a cleaning device (34) from which a second crop residue stream in the chopping operating mode and in the straw deposit mode may be delivered to the straw chopper (70), **characterized in that** the second crop residue stream may be deposited in a swath in the straw deposit mode.

2. Combine (10) according to Claim 1, **characterized in that** in the straw deposit mode the second crop residue stream may be introduced into the first crop residue stream or deposited thereunder.

3. Combine (10) according to Claim 1 or 2, **characterized in that** straw guide plates (82) arranged laterally side by side are arranged downstream of the straw chopper (70) which may be moved between a swath deposit position, in which the crop residue is deposited in a swath, and a wide distribution position in which the crop residue is distributed over the operating width.

4. Combine according to Claim 3, **characterized in that** the straw guide plates (82) may be moved into a position in which the second crop residue stream may be widely distributed outside the swath of the first crop residue stream.

5. Combine according to one of the preceding claims, **characterized by** an ejection drum (66) which is able to be set in rotation and is arranged between an outlet (64) of the cutting device and the straw chopper (70).

6. Combine (10) according to one of the preceding claims, **characterized in that** between the outlet of the cutting device and the straw chopper (70) a movable straw guide element (68) is arranged which guides the first crop residue stream in a first position past the straw chopper (70), preferably past the rear face thereof, so that it is deposited in a swath on the ground of the field, and in a second position causes the first crop residue stream to reach the straw chopper (70).

7. Combine (10) according to Claim 6, **characterized in that** the straw guide element (68) may be pivoted about an axis parallel to the axis of the ejection drum and preferably coinciding therewith, which extends horizontally and transversely to the direction of travel of the combine (10).

8. Combine (10) according to one of Claims 1 to 7, **characterized in that** the straw chopper (70) may be set in rotation in a housing (72) about a horizontal axis extending transversely to the direction of travel by a drive and comprises a cylindrical body with chopping blades suspended thereon in a floating manner, which cooperate with stationary counterblades arranged in the housing (72) and chop the crop residue and distribute said crop residue by means of a straw distributing hood (74) equipped with straw guide plates (82) approximately over the cutting width of the combine (10) on the field.

9. Combine (10) according to Claim 8, **characterized in that** the straw distributing hood (74) may be pivoted downwards manually or in a motorized manner about the horizontal axis extending transversely to the forward direction of travel (V) at its point of articulation on the housing (72) of the straw chopper (70), in order to deposit the chaff below the straw swath.

10. Combine (10) according to one of Claims 6 to 9, **characterized in that** the straw guide element (68) may be moved by motors between the straw depositing position and the chopping position, **in that** the straw guide plates (82) may be moved by actuators, and **in that** pushbuttons or menus are present which allow simultaneous adjustments to the straw guide element (68) and the straw guide plates (82).

## Revendications

1. Moissonneuse-batteuse (10) munie d'un dispositif de séparation, à partir duquel un premier flux de résidus de récolte peut être acheminé dans un mode de fonctionnement pour paille hachée vers un hache-paille (70) et peut être acheminé dans un mode de fonctionnement pour paille longue le long du hache-paille (70) et être déposé sous forme d'andain sur le sol d'un champ, et muni d'un dispositif de nettoyage (34) à partir duquel un deuxième flux de résidus de récolte peut être acheminé dans le mode de fonctionnement pour paille hachée et dans le mode de fonctionnement pour paille longue vers le hache-paille (70), **caractérisée en ce que** le deuxième flux de résidus de récolte, dans le mode de fonctionnement pour paille longue, peut être déposé sous forme d'andain.

2. Moissonneuse-batteuse (10) selon la revendication 1, **caractérisée en ce que** dans le mode de fonctionnement pour paille longue, le deuxième flux de résidus de récolte peut être introduit dans le premier flux de résidus de récolte ou être déposé en dessous de celui-ci.

3. Moissonneuse-batteuse (10) selon la revendication 1 ou 2, **caractérisée en ce qu'**en aval du hache-paille (70) sont agencés des déflecteurs de paille (82), qui sont disposés les uns à côté des autres et qui peuvent être déplacés entre une position pour andainage, dans laquelle les résidus de récolte sont déposés en andain, et une position de large répartition, dans laquelle les résidus de récolte sont répartis sur toute la largeur de travail.

4. Moissonneuse-batteuse (10) selon la revendication 3, **caractérisée en ce que** les déflecteurs de paille (82) peuvent être amenés dans une position, dans laquelle le deuxième flux de résidus de récolte peut être réparti en largeur en dehors de l'andain du premier flux de résidus de récolte.

5. Moissonneuse-batteuse (10) selon l'une quelconque des revendications précédentes, **caractérisée par** un cylindre d'éjection (66), qui est monté entre une sortie (64) du dispositif de séparation et le hache-paille (70) et qui peut être entraîné en rotation.

6. Moissonneuse-batteuse (10) selon l'une quelconque des revendications précédentes, **caractérisée en ce que**, entre la sortie du dispositif de séparation et le hache-paille (70), est agencé un élément de guidage de paille (68) mobile qui, dans une première position, guide le premier flux de résidus de récolte le long du hache-paille (70), de préférence le long de son côté arrière, de telle sorte que ledit flux peut être déposé en andain sur le sol du champ et qui, dans une deuxième position, fait en sorte que le premier flux de résidus de récolte entre dans le hache-paille (70).

7. Moissonneuse-batteuse (10) selon la revendication 6, **caractérisée en ce que** l'élément de guidage de paille (68) peut pivoter autour d'un axe parallèle à l'axe du cylindre d'éjection et, de préférence, coïncidant avec celui-ci et orienté horizontalement et transversalement à la direction de déplacement de la moissonneuse-batteuse (10).

8. Moissonneuse-batteuse (10) selon l'une quelconque des revendications 1 à 7, **caractérisée en ce que** le hache-paille (70), dans un carter (72), peut être entraîné en rotation autour d'un axe horizontal, orienté transversalement à la direction de déplacement, au moyen d'un système d'entraînement, et comporte un corps cylindrique avec des lames de hachage, qui sont accrochées à celui-ci de manière oscillante et qui coopèrent avec des contre-lames stationnaires, agencées dans le carter (72), et hachent en menus morceaux les résidus de récolte et répartissent ceux-ci sur le champ sensiblement sur la largeur de coupe de la moissonneuse-batteuse (10) au moyen d'un conduit de distribution (74) équipé de déflecteurs de paille (82).

9. Moissonneuse-batteuse (10) selon la revendication 8, **caractérisée en ce que** le conduit de distribution (74), au niveau de son point d'articulation contre le carter (72) du hache-paille (70), peut être basculé vers le bas, manuellement ou au moyen d'un moteur, autour de l'axe horizontal, orienté transversalement à la direction d'avance (V), afin de répartir les balles en dessous de l'andain de paille.

10. Moissonneuse-batteuse (10) selon l'une quelconque des revendications 6 à 9, **caractérisée en ce que** l'élément de guidage de paille (68) peut être déplacé par des moteurs entre la position d'andainage de paille longue et la position de hachage, **en ce que** les déflecteurs de paille (82) peuvent être déplacés par des actionneurs, et **en ce que** des boutons ou menus sont prévus pour permettre les réglages simultanés de l'élément de guidage de paille (68) et des déflecteurs de paille (82).
